# EUROPEAN PATENT APPLICATION

(11) **EP 1 219 524 A1**
(43) Date of publication of application: **03.07.2002**
(21) Application number: 00128690.5
(22) Date of filing: 29.12.2000
(51) Int. Cl.: B62D 5/04

(54) **Electric motor assisted power steering system**

(71) Applicant: Mando Corporation, Pyungtaek-si, Kyonggi-do 451-821 (KR)
(72) Inventor: Song, Jun Gyu, Mando Corporat., Central R&D Center, Pyungtaek-Si, Kyonggi-do 451-821 (KR)
(74) Representative: Lorenz, Werner, Dr.-Ing.

(57) **Abstract**

A power steering system (100) for steering a vehicle includes a motor (120), a steering shaft (110) coupled with dirigible wheels to be steered, a torque sensor (180) for detecting a torque applied to the steering shaft (110), and a power converting mechanism, engaged with a power transmitting shaft (110) and coupled with the dirigible wheels, for converting the driving power into a rotary power rotating the power transmitting shaft (110) in one of two opposite directions depending on a direction of the torque. The power converting mechanism includes a power transmitting mechanism (130) having a first gear (132) for rotating in unison with the motor (120), a second and a third gear (134,136) coupled with the first means for rotating in two opposite directions, a plate (138) for selectively transmitting a rotational power of one of the second and the third gears (134,136) to the power transmitting shaft (110) depending on the direction of the torque, a pair of magneto-rheological fluids (140,142) tightly sealed within a space between the second and the third gears (134,136) and the plate (138) respectively, and a pair of coils (144,146) wound around the magneto-rheological fluids (140,142).

## Description

The present invention relates to a power steering system; and, more particularly, to an electric motor assisted power steering system for use in a vehicle.

In general, a power steering system is classified into an electric type and a hydraulic type. The electric motor assisted power steering system is advantageous, compared with the hydraulic type, in that it does not require an oil pump or the like as a drive source, and therefore there is no possibility of leakage, contamination, deterioration or the like due to the use of a hydraulically operating oil, and maintenance is relatively easy because no operating oil is necessary.

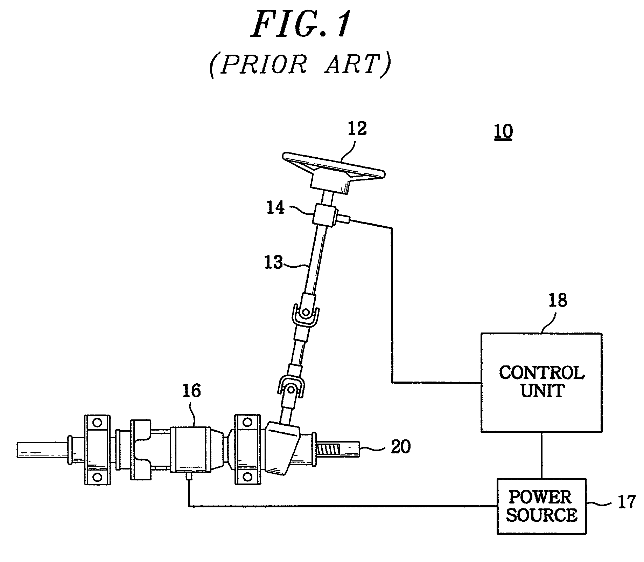

There is shown in Fig. 1, one of the prior art electric motor assisted power steering systems for steering a vehicle with dirigible wheels that is described in U.S.Pat. No. 4,577,715 entitled "POWER ASSIST STEERING GEAR ASSEMBLY".

The prior art electric motor assisted power assist steering system 10 includes a steering wheel 12; a steering shaft 13; a torque detecting sensor 14, mounted on the steering shaft 13, for detecting the torque applied to the steering wheel 12; an electric motor 16 for providing a driving force to manipulate the dirigible wheels; an electric power source 17 for providing power to the electric motor 16; a control unit 18 for controlling the electric power source 17 based on a torque signal detected by the torque detecting sensor 14; and a linearly movable member 20 for pivoting the dirigible wheels of the vehicle in response to a rotational motion of the electric motor 16.

In operation, when the steering wheel 12 is rotated in a direction, the torque generated by the rotation of the steering wheel 12 is detected by the torque detecting sensor 14. In response to the detected torque, the control unit 18 controls the electric power source 17 to drive the electric motor 16 to thereby pivot the wheels in a direction corresponding to the rotational direction of the steering wheel 12.

In such a steering system, the rotational direction of the electric motor is reversed when the rotational direction of the steering wheel is changed, resulting in a reduced response speed due to the rotational inertia force of the motor and a deteriorated durability due to the repeated reversal of the rotational direction.

It is, therefore, an object of the present invention to provide an electric motor assisted power steering system employing an electric motor rotating in one direction.

In accordance with a preferred embodiment of the present invention, there is provided a power steering system for steering a vehicle with dirigible wheels, comprising:
means for providing a driving power;
a steering shaft coupled with the dirigible wheels;
a torque sensor for detecting a torque applied to the steering shaft; and
a power converting mechanism, engaged with a power transmitting shaft and coupled with the dirigible wheels, for converting the driving power into a rotary power rotating the power transmitting shaft in one of two opposite directions depending on a direction of the torque.

In accordance with another preferred embodiment of the present invention, there is provided a power steering system for steering a vehicle with dirigible wheels, comprising:
a rotatable steering shaft;
a linearly movable member, coupled to the steering shaft, for pivoting the dirigible wheels;
a torque sensor for detecting the torque applied to the steering shaft;
a pinion and a rack gears for converting a rotational motion of the steering shaft into a translation motion of the linearly movable member and vice versa;
a driving source rotating in one direction;
a power transmitting mechanism for selectively converting a rotational power of the driving source into a rotary power of the steering shaft rotating the pinion gear in one of two opposite directions; and
a control unit for activating the driving source and controlling a rotational direction of the steering shaft in response to the detected torque.

The above and other objects and features of the present invention will become apparent from the following description of the preferred embodiments given in conjunction with the accompanying drawings, in which:
Fig. 1 shows a prior art motor assisted power steering system; and
Fig. 2 illustrates an electric motor assisted power steering system in accordance with the present invention.

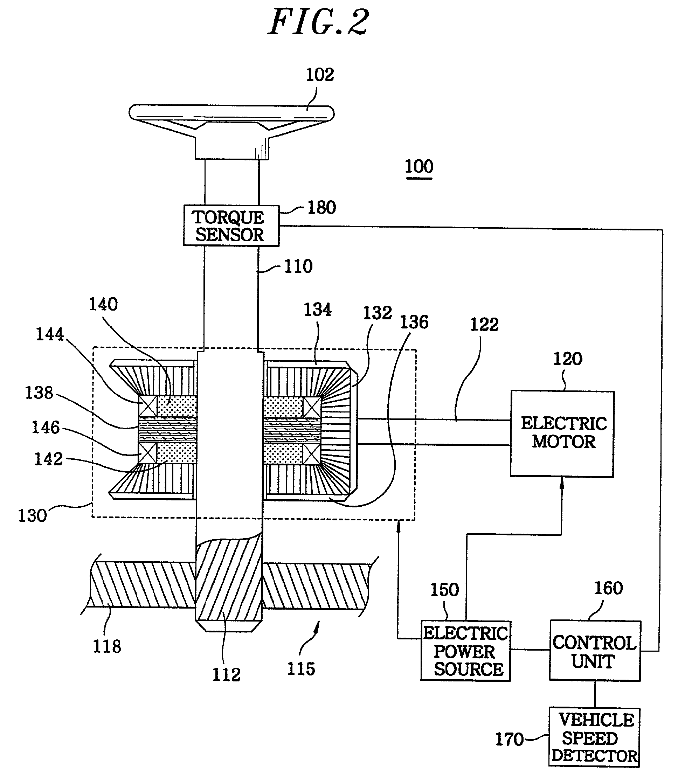

Referring to Fig. 2, there is illustrated an electric motor assisted power steering system 100 for use in a vehicle in accordance with the present invention.

The inventive power steering system 100 includes a rotatable steering wheel 102 connected to one end of a steering shaft 110 rotating therewith; a pinion gear 112 provided at the other end of the steering shaft 110 to rotate therewith; a linearly movable member 115 for pivoting the dirigible wheels(not shown) of the vehicle, a rack gear 118 being provided on the linearly movable member 115; an electric motor 120 rotating in one direction; a power transmitting mechanism 130 for selectively delivering the rotational power of the electric motor 120 to the steering shaft 110; a torque sensor 180, disposed on the steering shaft 110, for detecting a direction and a magnitude of a torque applied to the steering shaft 110; an electric power source 150 for providing electric power to the electric motor 120 and the power transmitting mechanism 130; and a control unit 160 for controlling the electric power source 150 based on the torque detected by the torque sensor 180.

The pinion and the rack gears 112, 118 engaged with each other serve to convert the rotational motion of the steering shaft 110 into the translational motion of the linearly movable member 115 and vice versa.

The power transmitting mechanism 130 includes a driving bevel gear 132 connected to a motor shaft 122 of the electric motor 120 to rotate in unison therewith; a pair of driven bevel gears 134, 136 slidably fitted around the steering shaft 110 and meshed with the driving bevel gear 132 to be driven to rotate in two opposite directions against each other; a plate 138 fixedly fitted around the steering shaft 110 to rotate therewith; and a pair of magneto-rheological("MR") fluids 140, 142 tightly sealed within and filling the spaces between the driven bevel gears 134, 136 and the plate 138, and wound with a pair of coils 144, 146 respectively.

As is well known, MR fluid is a free-flowing liquid with a consistency similar to that of motor oil. Exposure to a magnetic field, however, can transform the liquid into a near-solid in milliseconds and with the removal of the magnetic field, the fluid can be returned to its liquid state just as quickly. The degree of change in the MR fluid is proportional to the magnitude of the applied magnetic field. Consequently, by exposing the MR fluid 140 or 142 to a controlled magnetic field, the rotational force of either of the driven bevel gears 134, 136 can be selectively transmitted to the plate 138.

The operation of the inventive electric motor assisted power steering system 100 will now be described.

When a torque is applied on the steering shaft 110 by, e.g., the rotation of the steering wheel 102 and/or the restoring force of the dirigible wheels exerted on the pinion gear 112 through the linearly movable member 115, the direction and the magnitude of the torque are detected by the torque sensor 180. The detection scheme of the torque applied on a steering shaft 110 is well known in the art and therefore will not be described in detail for the sake of simplicity.

In response to a torque signal from the torque sensor 180 representing the magnitude and the direction of the detected torque, the control unit 160 issues to the electric power source 150 a control signal corresponding to the torque signal. In response to the control signal, the electric power source 150 provides an electric current to one of the coils 144, 146. In a preferred embodiment of the present invention, if a torque is applied on the steering shaft 110 in the clockwise direction when viewed from the steering wheel 102, the current is applied to, e.g., a first coil 144. In this case, even through the rotational power of the electric motor 120 is transmitted to both the driven gears 134, 136 and the driving gear 132, the only rotational power of the driven gear 134 is transmitted to the plate 138 to rotate the steering shaft 110 in a first direction since only the MR fluid 140 is magnetized by the coil 144. Similarly, a torque is developed on the steering shaft 110 in the counterclockwise direction, the current is applied to a second coil 146. In this case, since only the MR fluid 142 is magnetized, only the rotational power of the driven gear 136 is transmitted to the plate 138 to rotate the steering shaft 110 in a second direction reverse to the first direction. Accordingly, by selectively applying a current varying with the magnitude of the detected torque to one of the coils 144, 146 depending on the direction of the torque, it is possible to control the steering shaft 110 to rotate in one of the two directions with a desired rotational power while rotating the electric motor 120 in one predetermined direction. Thereafter, the rotational power of the steering shaft 110 is transmitted to the linearly movable member 115 via the pinion and the rack gears 112, 118. At this time, the moving direction of the linearly movable member 115 is determined by the rotational direction of the steering shaft 110. Finally, the linearly movable member 115 pivots the dirigible wheels through a ball joint(not shown) and a knuckle arm(not shown), thereby steering the vehicle.

The present invention may further include a vehicle speed detector 170 for detecting a traveling speed of the vehicle. In this case, the control unit 160 can be configured to control the electric power source 150 to provide the power transmitting mechanism 130 with a current having a current level adapted to reflect the magnitude of the detected torque and the vehicle speed as well.

In accordance with the present invention as described above, the steering direction of the vehicle can be changed by simply controlling the magnetic field applied to a desired magneto-rheological fluid without having to change the rotational direction of the electric motor. As a consequence, therefore, the reduced response speed and durability problem due to the change in the rotational direction of the motor of the prior art electric motor assisted steering system can be solved.

Although the preferred embodiment of the invention has been described with respect to power transmitting mechanism coupled with the steering shaft, it is to be understood that the power transmitting mechanism can be coupled with a power transmitting shaft installed separately from the steering shaft but coupled with the linearly movable member in order to transmit thereto the converted rotational power from the power transmitting mechanism.

Also, it should be noted to those skilled i the art that instead of using an electric motor to generate a driving power of the power transmitting mechanism, the driving power can be provided directly or indirectly by the engine of the vehicle in a similar manner, e.g., as in the alternator of vehicle coupled to the crank shaft by a belt.

It is also to be noted that other types of power transmitting members than the bevel gears, pinion gear and rack gear can be employed. Further, instead of changing the current level to a coil according to the magnitude of the torque, it may also possible to adjust the rotational speed of the electric motor to the magnitude of the torque.

While the invention has been shown and described with respect to the preferred embodiments, it will be understood by those skilled in the art that various changes and modifications may be made without departing from the scope of the invention as defined in the following claims.

## Claims

1. A power steering system for steering a vehicle with dirigible wheels, comprising:
means for providing a driving power;
a steering shaft coupled with the dirigible wheels;
a torque sensor for detecting a torque applied to the steering shaft; and
a power converting mechanism, engaged with a power transmitting shaft and coupled with the dirigible wheels, for converting the driving power into a rotary power rotating the power transmitting shaft in one of two opposite directions depending on a direction of the torque.

2. The power steering system of claim 1, wherein the power converting mechanism includes a power transmitting mechanism having a first means for rotating in unison with the power providing means; a second and a third means coupled with the first means for rotating in two opposite directions; and a fourth means for selectively transmitting a rotational power of one of the second and the third means to the power transmitting shaft depending on the direction of the torque detected by the torque sensor.

3. The power steering system of claim 2, wherein the first, the second and the third means are bevel gears, the first means being meshed with the second and the third means, and the second and the third means being slidably fitted around the power transmitting shaft.

4. The power steering system of claim 3, wherein the fourth means includes a plate fixedly fitted around the power transmitting shaft and positioned between the second and the third means; a first magneto-rheological(MR) fluid tightly sealed within a space between the second means and the plate; a second MR fluid tightly sealed inside a space between the third means and the plate; a first coil wound around the first MR fluid; and a second coil wound around the second MR fluid.

5. The power steering system of claim 4, wherein the power converting mechanism further includes a control means for selectively supplying a current to one of the first and the second coils depending on the direction of the torque detected by the torque sensor.

6. The power steering system of claim 5, wherein the control means varies a current level with the magnitude of the torque.

7. The power steering system of claim 6, further comprising a vehicle speed detector for detecting a speed of the vehicle and wherein the current level varies with the magnitude of the torque and the speed of the vehicle.

8. The power steering system of claim 1, wherein the power providing means is an electric motor.

9. The power steering system of claim 8, wherein the power providing means rotates in one direction.

10. The power steering system of claim 1, wherein the power transmitting shaft is a portion of the steering shaft.

11. A power steering system for steering a vehicle with dirigible wheels, comprising:
a rotatable steering shaft;
a linearly movable member, coupled to the steering shaft, for pivoting the dirigible wheels;
a torque sensor for detecting a torque applied to the steering shaft;
a pinion and a rack gears for converting a rotational motion of the steering shaft into a translation motion of the linearly movable member and vice versa;
a driving source rotating in one direction;
a power transmitting mechanism for selectively converting a rotational power of the driving source into a rotary power of the steering shaft rotating the pinion gear in one of two opposite directions; and
a control unit for activating the driving source and controlling a rotational direction of the steering shaft in response to the detected torque.

12. The power steering system of claim 11, wherein the driving source is an electric motor.

13. The power steering system of claim 12, wherein the power transmitting mechanism includes a driving gear connected to the electric motor to rotate therewith; a pair of driven gears slidably fitted around the steering shaft and meshed with the driving gear to rotate in opposite directions against each other; a plate fixedly fitted around the steering shaft to rotate therewith, a pair of magnetorheological(MR) fluids provided in spaces between the driven gears and the plate respectively and serving to selectively transmit a rotational power of either of the driven gears to the plate, a pair of coils wound around the magnetorheological(MR) fluids respectively.

14. The power steering system of claim 13, wherein the control unit provides a current to one of two coils depending on the direction of the torque and a magnitude of the current is determined based on a magnitude of the torque.

15. The power steering system of claim 13, wherein the driving gear and the driven gears are bevel gears.

16. The power steering system of claim 14, further comprising a vehicle speed detector for detecting a vehicle speed,
wherein the magnitude of the current is determined based on the vehicle speed and the magnitude of the torque.
